# FASCICULE DE BREVET EUROPEEN

(11) **EP 1 635 605 B1**
(45) Date de publication et mention de la délivrance du brevet: **21.11.2007**
(21) Numéro de dépôt: 05108011.7
(22) Date de dépôt: 01.09.2005
(51) Int. Cl.: H04Q 11/00

(54) **Station pour réseau optique apte à insérer des paquets dans un train de paquets en transit**
Station für ein optisches Netzwerk geignet zum Einfügen von Paketen in einem Strom von durchlaufenden Paketen
Station for an optical network adapted to insert packets by void filling in a transiting packets stream

(30) Priorité: 08.09.2004 FR 0451986
(43) Date de publication de la demande: 15.03.2006
(73) Titulaire: Alcatel Lucent, 75008 Paris (FR)
(72) Inventeur: Ciavaglia, Laurent, 77300 Fontainebleau (FR); Le Sauze, Nicolas, 91440 Bures-sur-Yvette (FR); Ge, An, Plano, Texas 75025 (US)
(74) Mandataire: Korakis-Ménager, Sophie

(56) Documents cités:
- EP-A- 1 030 534
- TANCEVSKI L ET AL: "OPTICAL ROUTING OF ASYNCHRONOUS, VARIABLE LENGTH PACKETS" IEEE JOURNAL ON SELECTED AREAS IN COMMUNICATIONS, IEEE INC. NEW YORK, US, vol. 18, no. 10, octobre 2000 (2000-10), pages 2084-2093, XP000976897 ISSN: 0733-8716
- TENG, ROUSKAS: PROC. OF THE FIRST INTERNATIONAL WORKSHOP ON OPTICAL BURST SWITCHING, [Online] 31 octobre 2003 (2003-10-31), XP002327872 Extrait de l'Internet: URL:http://www.csc.ncsu.edu/faculty/rouska s/Ar0ra/Conferences/WOBS-Teng-2003.pdf> [extrait le 2005-05-11]

## Description

L'invention concerne le domaine de la transmission de données dans les réseaux optiques, ces données étant véhiculées dans des liaisons optiques sous la forme de signaux optiques organisés en paquets.

L'invention peut s'appliquer notamment aux réseaux en anneau à multiplexage de longueurs d'onde (ou (D)WDM pour "(Dense) Wavelength Division Multiplexing").

D'une façon générale, un réseau optique est constitué d'une pluralité de stations susceptibles d'émettre et de recevoir des signaux optiques à destination et en provenance d'autres stations du réseau. Ces échanges d'informations s'effectuent au moyen de liaisons optiques auxquelles sont connectés des noeuds d'accès qui desservent respectivement ces stations.

Certains réseaux du type précité, comme par exemple le réseau d'accès métropolitain dit "DBORN" (pour "Dual Bus Optical Ring Network"), comprennent des stations de communication couplées à au moins une fibre optique commune, adaptée à la transmission de paquets de signaux optiques multiplexés en longueur d'onde, et mettent en oeuvre un protocole de remplissage de trous (ou "void filling"). Ce protocole permet de gérer, pour chaque longueur d'onde et pour chaque station, l'insertion des paquets en attente de transmission parmi les paquets en transit au niveau de la station. Un tel réseau a fait notamment l'objet de la présentation "DBORN : a shared WDM Ethernet bus architecture for optical packet metropolitan networks" à la conférence Photonics in Switching PIS'2002, Cheju Island, Corée, juillet 2002, TuC3.

On entend ici par "trou" un emplacement temporel vide, c'est-à-dire dépourvu de paquet, entre deux paquets consécutifs appartenant à un train (ou flux) de paquets successifs en cours de transmission par une liaison optique.

La mise en oeuvre de ce protocole au niveau d'une station repose sur l'observation du trafic correspondant à chaque longueur d'onde au sein de la fibre optique de transmission, combinée à l'utilisation d'une ligne à retard optique intercalée dans la liaison optique.

Plus précisément, le réseau comprend donc une liaison optique prévue pour véhiculer des trains de paquets constitués de paquets optiques successifs portés chacun par une longueur d'onde commune et se propageant selon un sens donné. Une station de ce réseau comporte alors un dispositif d'émission couplé à la liaison optique en un point dit "d'insertion" de façon à pouvoir injecter dans la liaison des paquets optiques portés par cette longueur d'onde commune, les paquets injectés se propageant alors vers l'aval selon le sens précité.

La station est en outre prévue pour observer en un point de la liaison, dit "de détection", situé en amont du point d'insertion les trains de paquets dit "amont" issus de diverses sources d'émission disposées en amont et véhiculés, toujours selon ce même sens de propagation, jusqu'à ce point de détection. Vis-à-vis de la station considérée, les paquets observés sont des paquets en transit, c'est-à-dire qui doivent continuer à se propager dans la liaison en l'aval de la station.

La station est alors prévue pour qu'en fonction de cette observation, chaque paquet correspondant à des données en attente d'émission et qui sera effectivement émis par le dispositif d'émission entraîne la formation au point d'insertion d'un train de paquets dit "aval", ce train aval contenant ce paquet émis, lequel sera intercalé entre deux paquets consécutifs en transit, c'est-à-dire entre deux paquets délimitant un trou du train amont ayant une "taille" temporelle suffisante pour contenir intégralement le paquet émis.

En pratique, la taille d'un trou sera considérée comme "suffisante" si elle est au moins égale à la taille du paquet à émettre proprement dite, c'est-à-dire la durée de transmission des données qui le constituent, à laquelle on ajoute une durée supplémentaire fixée égale au double d'un espace temporelle, dit "bande de garde" (ou "temps de garde"), qui est une durée minimale imposée pour séparer deux paquets consécutifs, notamment pour permettre en réception d'extraire plus facilement chaque paquet d'un train reçu. Cette durée supplémentaire sera dans la suite considérée comme intégrée dans la taille du paquet si on définit une taille de paquet "effective" comme la somme de la taille proprement dite de ce paquet à émettre et de cette durée supplémentaire.

Le déclenchement effectif de l'émission d'un paquet à émettre sera alors conditionné par le résultat d'une comparaison entre la taille des trous observés dans le train amont et la taille "effective" du paquet. A noter que cette durée supplémentaire pourra prendre une valeur choisie qui ménage un certaine marge de tolérance, notamment pour prendre en compte l'imprécision inévitable sur le délai séparant l'instant où le résultat de la comparaison obtenu est favorable et l'instant où le paquet émis sera effectivement injecté dans la fibre.

Compte tenu de la nature optique des paquets qui ne peuvent pas être mémorisés sans conversion dans le domaine électrique, on dispose entre le point de détection et le point d'insertion une ligne à retard optique dont un rôle est de retarder les paquets en transit pendant une durée suffisante pour permettre à la station d'effectuer les opérations appropriées, c'est-à-dire déterminer si un trou observé au point de détection a une taille suffisante pour le paquet en attente, puis injecter dans la fibre la totalité du paquet (en ménageant les bandes de garde requises) avant que la fin de ce trou n'ait dépassé le point d'insertion. La ligne à retard doit aussi présenter une longueur suffisante pour pouvoir détecter des tailles de trous au moins égales à une taille maximale de paquet prévue. Par exemple, dans un réseau à protocole Ethernet les paquets les plus longs comportent environ 1500 octets, ce qui pour une fréquence bit donnée permet d'en déduire la taille temporelle maximale correspondante. Dans la suite, on considérera que la ligne à retard fait partie de la station.

Un processus d'insertion de ce type mis en oeuvre dans chacune des stations d'un réseau présente l'avantage que la gestion du réseau est distribuée parmi les stations, sans nécessiter des moyens de contrôle ou de synchronisation centralisés qui impliqueraient des échanges permanents de signaux spécifiques de contrôle, de synchronisation et de commande. Il en résulte une bonne flexibilité, notamment car on peut ajouter ou retirer des stations sans que cela impacte les configurations des autres stations ou autres émetteurs ou récepteurs du réseau. Par ailleurs, pour chaque station, les tailles temporelles des paquets émis ne sont imposées que dans la limite d'une taille maximale conditionnée par le choix de la ligne à retard.

Pour une mise en oeuvre du processus d'insertion de ce type, la station devra être conçue pour traiter en temps réel tous les cas qui peuvent se présenter.

Plus précisément, on peut distinguer en fait plusieurs situations que la station est en mesure de détecter et doit pouvoir prendre en compte :
1/ Au moins un paquet est en attente, mais la station ne détecte pas de trou de taille suffisante dans le train de paquets amont.
2/ Au moins un paquet était en attente et la station vient juste de détecter un trou de taille suffisante.
3/ La station détecte l'apparition d'un trou, mais aucun paquet n'est en attente.
4/ La station avait détecté l'apparition d'un trou alors qu'aucun paquet n'était en attente et elle détecte l'arrivée d'un nouveau paquet en attente alors que le trou détecté est toujours présent et a une taille suffisante.

Dans les cas 1/ et 3/, la station n'effectue bien sûr aucune émission. Pour les autres cas 2/ et 4/, il peut sembler naturel que la station soit prévue pour déclencher l'insertion dès que possible. Ainsi, pour le cas 2/, au moins un paquet étant en attente, dès qu'un trou de taille suffisante est détecté dans le train de paquets amont, la station déclenchera l'émission d'un paquet au plus tôt, c'est-à-dire à un instant tel que le paquet émis entraînera la formation au point d'insertion d'un train de paquets aval où ce paquet émis est "accolé" à la suite du premier paquet délimitant le trou détecté. Le terme "accolé" signifie en pratique que le paquet émis soit séparé temporellement de la fin du premier paquet d'un intervalle de temps inférieur à une valeur maximale déterminée, cette valeur maximale étant de préférence la plus petite possible, mais toutefois sans être inférieure à la bande de garde mentionnée précédemment.

Dans le cas 4/, l'émission d'un paquet est possible dès l'apparition du nouveau paquet en attente. Ainsi, son émission au plus tôt aura pour effet la formation au point d'insertion d'un train de paquets aval où ce paquet émis est toujours situé à l'intérieur d'un trou, mais à une position qui ne dépend que de l'instant d'apparition du nouveau paquet en attente, c'est-à-dire sans être nécessairement accolé à un paquet du train amont.

Ce fonctionnement est optimale pour que les paquets que doit émettre la station subissent des délais d'attente minimaux. Cette propriété est intéressante pour la station mais peut toutefois avoir des conséquences défavorables au niveau de l'ensemble du réseau.

En effet, dans le type de réseau considéré, le taux moyen d'occupation de la liaison par des paquets augmente de l'amont vers aval à chaque station rencontrée. Si en amont d'une station considérée on augmente le nombre de stations et/ou leurs activités d'émission, le pourcentage de trous dans le train de paquets amont de cette station va diminuer. Or, en appliquant dans chaque station le fonctionnement décrit ci-dessus, plus une station est placée en aval, plus on augmente en plus la probabilité d'y observer des trains de paquets amont qui présentent un espace temporel vide de paquets fortement fragmenté, c'est-à-dire qui comporte de nombreux trous dont les tailles sont trop petites pour y insérer des paquets. La probabilité de rencontrer de tels trous dépend des types de trafic engendrés respectivement par les différentes stations amont, mais en tout cas augmentera avec le nombre des stations.

EP-A-1030534 décrit une station pour réseau optique conforme au préambule de la revendication 1.

L'invention à pour but de proposer une autre solution qui ne présente pas cet inconvénient. Dans ce but, l'invention a pour objet une station pour réseau de transmission optique, ce réseau comprenant au moins ladite station et une liaison optique prévue pour véhiculer des trains de paquets constitués de paquets optiques successifs portés chacun par une longueur d'onde commune et se propageant selon un sens donné, un intervalle de temps séparant deux paquets consécutifs d'un train de paquets étant appelé "trou", ladite station comportant un dispositif d'émission couplé à ladite liaison en un point d'insertion et apte à injecter dans la liaison des paquets optiques portés par ladite longueur d'onde commune, la station étant prévue pour observer en un point de détection de la liaison situé en amont dudit point d'insertion les trains de paquets dit "amont" véhiculés jusqu'à ce point de détection, et pour qu'en fonction de cette observation chaque paquet correspondant à des données en attente d'émission et émis par ledit dispositif d'émission entraîne la formation au point d'insertion d'un train de paquets dit "aval", ce train aval contenant ledit paquet émis intercalé entre des premier et second paquets délimitant un trou dudit train amont, caractérisé en ce que ladite station comporte un dispositif de détection desdits trains de paquets "amont" apte à former un signal de contrôle d'émission tel qu'en cas d'émission par le dispositif d'émission en fonction dudit signal de contrôle, tout paquet émis et intercalé entre lesdits premier et second paquets délimitant un trou, qui est donc de taille suffisante, soit accolé à l'un au moins desdits premier et second paquets, c'est-à-dire soit séparé temporellement soit dudit premier paquet, soit dudit second paquet d'un intervalle de temps inférieur à une valeur maximale déterminée.

Grâce à l'invention, on peut imposer que l'insertion de chaque paquet dans un trou du train amont n'aura pour effet que de réduire sa taille à une valeur égale à la différence entre sa taille initiale et la taille effective du paquet inséré.

Au contraire, avec le fonctionnement envisagé auparavant, un paquet peut être inséré sans être accolé, ce qui crée deux trous ayant chacun une taille inférieure à la différence indiquée ci-dessus. Le risque de multiplier des trous trop petits pour y insérer des paquets est donc accru. L'invention permet de l'éviter, ce qui est particulièrement bénéfique pour les stations placées le plus en aval de la liaison, dans les réseaux où les stations amont peuvent engendrer des trafics respectifs très différents.

Selon une première possibilité, ledit premier paquet désignant celui qui précède ledit second paquet, le signal de contrôle est tel que tout paquet émis en fonction de ce signal de contrôle soit accolé exclusivement audit premier paquet.

Cette solution est la plus simple à mettre en oeuvre car l'observation des trous reste simple.

Selon une variante de l'invention, on peut prévoir au contraire que ledit signal de contrôle est tel que tout paquet émis en fonction de ce signal de contrôle soit accolé exclusivement audit second paquet.

Cette dernière possibilité est moins évidente à mettre en oeuvre, mais peut trouver un intérêt si on souhaite aussi agir sur l'ordre de succession des paquets dans les trains de paquets formés.

Selon un mode de réalisation préféré, ledit signal de contrôle est tel que tout paquet émis en fonction de ce signal de contrôle soit en priorité accolé audit premier paquet, et bien sûr à défaut, mais à défaut seulement, il sera accolé audit second paquet.

Ainsi, pour tout paquet disponible pour être émis à un instant ne permettant pas qu'il soit accolé après le premier paquet délimitant un trou détecté, on n'attend pas la détection d'un trou suivant de taille suffisante pour l'accoler au premier paquet délimitant ce trou suivant. Cette dernière solution présente l'avantage de donner aux paquets en attente la meilleure probabilité d'être insérés à bref délai, car le délai d'attente avant que se présente ce trou suivant peut être très long si le trafic amont est important.

Ainsi, les trois possibilités précédentes correspondent à trois modes de fonctionnement possibles des stations d'un réseau. On pourra ainsi configurer sélectivement les stations selon ces trois modes, et donc leur donner des priorités d'insertion différentes, par exemple si on veut compenser le fait que les stations les plus en aval sont moins privilégiées pour insérer leurs paquets.

Dans un aspect de mise en oeuvre conforme à l'invention, la station comporte un dispositif de minutage pour mesurer le temps écoulé depuis l'instant où sont détectées des données en attente d'émission correspondant à un paquet à émettre, ce dispositif de détection étant apte à former un signal de validation tel qu'en cas d'émission par le dispositif d'émission en réponse à ce signal de validation, tout paquet émis soit intercalé entre lesdits premier et second paquets délimitant un trou, ce dispositif de minutage étant prévu pour déclencher l'émission dudit paquet à émettre en réponse audit signal de validation, indépendamment dudit signal de contrôle d'émission.

L'invention concerne également un réseau comprenant une liaison optique et au moins une station conforme aux définitions précédentes.

D'autres aspects et avantages de l'invention apparaîtront dans la suite de la description en référence aux figures.
- La figure 1 représente un exemple de réseau d'accès métropolitain dans lequel l'invention peut s'appliquer.
- La figure 2 représente schématiquement un exemple de station du réseau de la figure 1 où est mis en oeuvre un protocole de remplissage de trous appliqué à plusieurs longueurs d'onde.
- La figure 3 montre un module de contrôle d'un dispositif de détection et un circuit électronique d'un dispositif d'émission selon un exemple de réalisation d'une station selon l'invention.
- Les figures 4 et 5 montrent des détails d'un exemple de réalisation d'un module de contrôle d'un dispositif de détection équipant une station selon l'invention.
- La figure 6 représente des chronogrammes A à I de divers signaux impliqués et permettant d'expliquer le fonctionnement de la station selon l'invention.
- La figure 7 représente des chronogrammes A à I de divers signaux impliqués et permettant d'expliquer le fonction de la station selon un mode de réalisation préféré de l'invention.

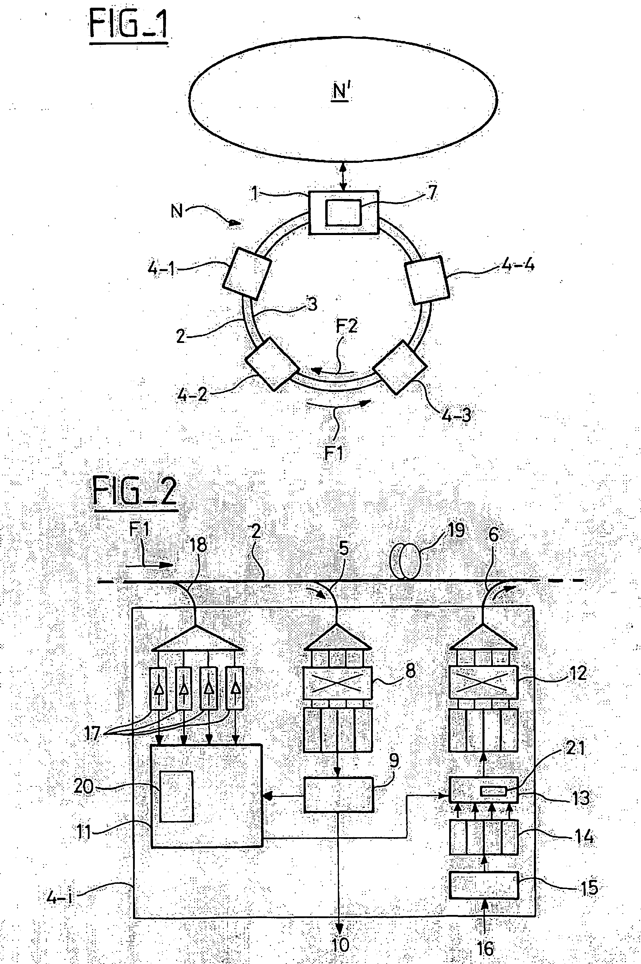

Un exemple de contexte d'utilisation de l'invention est d'abord exposé à l'aide du réseau représenté schématiquement à la figure 1.

Dans ce qui suit, on considère que le réseau est en anneau et à multiplexage de longueurs d'onde (dit "(D)WDM" pour " (Dense) Wavelength Division Multiplexing ") comme le réseau d'accès métropolitain de télécommunications, de type DBORN. Mais, l'invention n'est pas limitée à cette seule application. Elle concerne également les réseaux à liaisons optiques de type "bus optiques", c'est-à-dire partagées entre plusieurs stations, également connus sous le nom de "réseaux à accès multiples".

Le réseau en anneau N illustré sur la figure 1 comporte, classiquement, un noeud d'accès principal (ou hub) 1, auquel est raccordée l'une au moins des deux extrémités de fibres optiques 2, 3 destinées à la transmission de données sous forme de paquets optiques, et plusieurs stations d'utilisateurs 4-i (ici, par exemple i = 1 à 4 ), couplées optiquement aux fibres 2, 3, via des moyens de couplage qui seront décrits plus loin en référence à la figure 2.

Le réseau en anneau N est généralement raccordé à un autre réseau, dit « fédérateur » (ou « backbone ») N', via le noeud d'accès 1.

Comme mentionné ci-dessus, le réseau N comporte une première fibre optique 2 dédiée au trafic montant depuis les stations 4-i vers le noeud d'accès 1 (flèche F1), et une seconde fibre optique 3 dédiée au trafic descendant depuis le noeud d'accès 1 vers les stations 4-1 (flèche F2). Mais, on peut envisager un réseau N simplifié dans lequel on ne prévoit qu'une unique fibre dédiée aux deux types de trafic (montant et descendant). Par ailleurs, on peut également envisager que le réseau N comporte au moins une autre fibre optique dédiée à la protection du trafic en cas de défaillance survenue sur les première 2 et seconde 3 fibres optiques.

Le noeud d'accès 1, qui est typiquement de type électronique, comporte des moyens de mémorisation, tels que des mémoires électroniques, destinés à mémoriser le trafic, au moins de façon temporaire, et un commutateur électronique 7, de type Ethernet ou IP, équipé de moyens de conversion de type O/E/O (« Optique / Electrique / Optique ») de façon à pouvoir accéder à l'intégralité du trafic circulant dans l'anneau. Un tel noeud d'accès réalisant ces fonctions est généralement appelé "concentrateur" ("hub" en anglais).

Il est par ailleurs rappelé que dans un réseau en anneau N, de type DBORN, on peut faire le choix que les stations 4-i ne puissent pas dialoguer entre elles directement. Lorsqu'elles souhaitent dialoguer entre elles, elles doivent tout d'abord transmettre leurs données (sous la forme de paquets de signaux optiques), via la première fibre 2, au noeud d'accès 1, qui se charge de les retransmettre à la station concernée via la seconde fibre 3. Par conséquent, dans ce type de réseau en anneau, le mécanisme de remplissage selon l'invention, qui va être décrit ci-après, ne s'applique qu'à la première fibre 2 dédiée au trafic montant.

On se réfère maintenant à la figure 2 pour décrire les principaux sous-ensembles constitutifs d'une des station 4-i du réseau.

Dans l'exemple de réalisation illustré, la station 4-i n'est couplée qu'à la première fibre 2 afin de ne pas surcharger les connexions. Mais, son couplage à la seconde fibre 3 (illustrée sur la figure 1) peut être envisagé. Par ailleurs, on considère ici, à titre d'exemple que les quatre stations du réseau de la figure 1 utilisent en émission un même jeu de quatre longueurs d'onde λ1 à λ4. Mais, bien entendu, il pourrait en être autrement.

Pour les fonctions de réception, la station 4-i comporte tout d'abord un module de réception 8 couplé à la première fibre optique 2 par un coupleur optique passif 5, de type 2x1. Ici, le module de réception 8 est plus précisément constitué d'un démultiplexeur alimentant un commutateur, qui alimente lui-même quatre récepteurs dédiés respectivement à quatre longueurs d'onde de réception. Ces quatre récepteurs sont couplés à un circuit 9 de traitement de paquets extraits alimentant une sortie 10 couplée à un terminal non représenté.

Pour les fonctions d'émission, la station 4-i comporte un dispositif d'émission composé essentiellement d'un module d'émission 12, d'un circuit électronique 13, de mémoires 14 et d'un module d'alimentation 15.

Le module d'émission 12 est couplé à la fibre 2 par un coupleur optique passif 6, de type 2x1. L'emplacement du coupleur 6 va ainsi matérialiser un point d'insertion de paquets dans la fibre 2.

Ici, le module d'émission 12 est plus précisément constitué de quatre sources de signaux optiques, à base de lasers, délivrant des ondes porteuses de quatre longueurs d'onde différentes λ1 à λ4 et modulées en amplitude de façon à former les paquets optiques à transmettre dans la fibre 2, d'un commutateur alimenté par les sources, et d'un multiplexeur alimenté par le commutateur et relié au coupleur passif 6.

Les sources du module d'émission 12 sont commandées par le circuit électronique 13 chargé, d'une part, de lire les contenus des mémoires 14, de préférence de type FIFO, selon des rythmes définis en fonction d'une détection de trous du trafic amont, et d'autre part de mettre en forme les données lues dans les mémoires 14 avant leurs conversions et émissions sous forme de paquets optiques par les sources du module 12. Les mémoires 14 sont par ailleurs alimentées en données et commandées par le module d'alimentation de données 15 lui même relié au terminal par une liaison 16.

Pour la fonction de détection de trous du trafic amont, la station 4-i comporte un dispositif de détection composé ici essentiellement de quatre détecteurs 17 et d'un module de contrôle 11.

Les détecteurs 17 sont respectivement chargés d'observer sur la fibre 2 les trafics portés par les quatre longueurs d'onde λ1 à λ4 afin de délivrer au module de contrôle 11 des signaux de détection représentatifs du trafic "amont", c'est-à-dire véhiculé par la fibre 2 et présent en un point de détection matérialisé par l'emplacement d'un coupleur 18 disposé en amont des coupleurs 5 et 6 et séparé d'eux par une ligne à retard optique 19 insérée dans la fibre 2.

Chaque détecteur 17 est donc couplé à la fibre 2 par l'intermédiaire du coupleur 18 de type 1x2 suivi d'un démultiplexeur de longueurs d'onde.

Pour mettre en oeuvre l'invention, la station comporte des moyens spécifiques, notamment un module de traitement 20 (montré arbitrairement sur la figure 2 comme faisant partie du module de contrôle 11) prenant en compte pour chaque longueur d'onde l'observation du trafic amont et l'état du dispositif d'émission (présence et taille des paquets en attente d'émission).

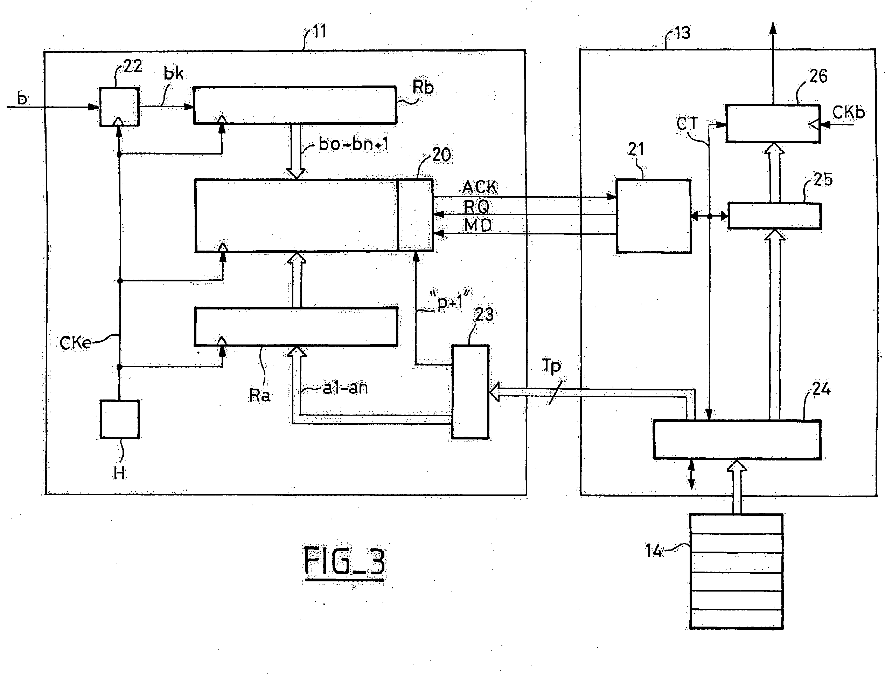

La figure 3 montre schématiquement une réalisation possible du module de contrôle 11 et du circuit électronique 13 mettant en oeuvre l'invention pour une longueur d'onde particulière.

Le module de contrôle 11 comporte essentiellement les éléments fonctionnels suivants :
- le module de traitement 20;
- des premier et second registres à décalage Ra, Rb affectés respectivement aux paquets en attente d'émission et au train de paquets amont, et ayant chacun des sorties parallèles reliées au module 20;
- un circuit de mise en forme 22 recevant un signal de détection b fourni par un des détecteurs 17, et ayant une sortie reliée à une entrée de chargement série du registre Rb;
- une interface de conversion 23 recevant du circuit 13 une information Tp représentative de la taille effective de chaque nouveau paquet prêt à être émis, et ayant des sorties parallèles a1-an reliées à des entrées parallèles homologues du registre Ra, et une autre sortie "p+1" reliée au module 20;
- une source H de signal d'horloge d'échantillonnage CKe reliée au module 20, aux registres Ra, Rb et au circuit 22.

Le circuit 13 comporte essentiellement les éléments suivants :
- un module de synchronisation 21;
- une mémoire tampon de sortie 25;
- une interface de chargement 24 ayant des entrées parallèles reliées à des sorties parallèles homologues de la mémoire 14, des premières sorties parallèles reliées à des entrées parallèles homologues de la mémoire tampon 25, des secondes sorties parallèles pour fournir à l'interface de conversion 23 l'information de taille Tp précitée;
- un circuit de conversion parallèle-série 26 ayant des entrées parallèles reliées à des sorties parallèles homologues de la une mémoire tampon 25 et synchronisé par un signal d'horloge bit CKb dont la fréquence est un multiple prédéfini de celle du signal d'horloge d'échantillonnage CKe.

Le module de synchronisation 21 communique en outre avec la mémoire tampon 25, le circuit de conversion 26 et le module d'alimentation 15, via l'interface de chargement 24, par des lignes de contrôle CT non représentées en détail. Le module de synchronisation 21 communique d'autre part avec le module de traitement 20 au moyen de signaux RQ, MD, ACK.

Le signal RQ est une requête d'autorisation d'émission d'un paquet en attente, destinée au module de traitement 20 et émise par le module de synchronisation 21. Le signal ACK est un signal d'autorisation d'émission destiné au module de synchronisation 21 et émis par le module de traitement 20 en réponse à une requête antérieure d'autorisation d'émission RQ. Le signal MD est un signal de mode d'insertion qui sera expliqué ultérieurement.

Le circuit 13 fonctionne de la façon suivante. Initialement, si au moins un paquet est en attente dans la mémoire 14, cet état est signalé au module de synchronisation 21 par le module d'alimentation 15 et un paquet sélectionné (par exemple le plus ancien en attente et qui bénéficie d'une classe de qualité de service la plus privilégiée) est chargé dans la mémoire tampon 25 par l'intermédiaire de l'interface de chargement 24. Simultanément, l'interface 24 émet par ses sorties parallèles Tp une donnée représentative de la taille du paquet chargé dans la mémoire tampon 25, et le module de synchronisation 21 envoie au module de traitement 20 une requête d'autorisation d'émission RQ.

En réponse à la requête RQ et en fonction de l'information sur la taille du paquet Tp et de l'observation du train amont, le module de traitement 20 détermine l'instant où l'émission d'un paquet doit être déclenchée et en informe le module de synchronisation 21 par exemple par une mise à 1 du signal d'autorisation d'émission ACK. En réponse au signal ACK, le module de synchronisation 21 active le circuit de conversion 26 pour déclencher le transfert du paquet présent dans la mémoire tampon 25 vers le circuit de conversion 26 qui procède alors à l'émission série du paquet au rythme de la fréquence bit CKb. Simultanément, le module de synchronisation 21 autorise le chargement d'un nouveau paquet en attente dans la mémoire 14. Si celle-ci n'est pas vide, un nouveau paquet est chargé dans la mémoire tampon 25 par l'intermédiaire de l'interface de chargement 24 et le processus se répète comme précédemment.

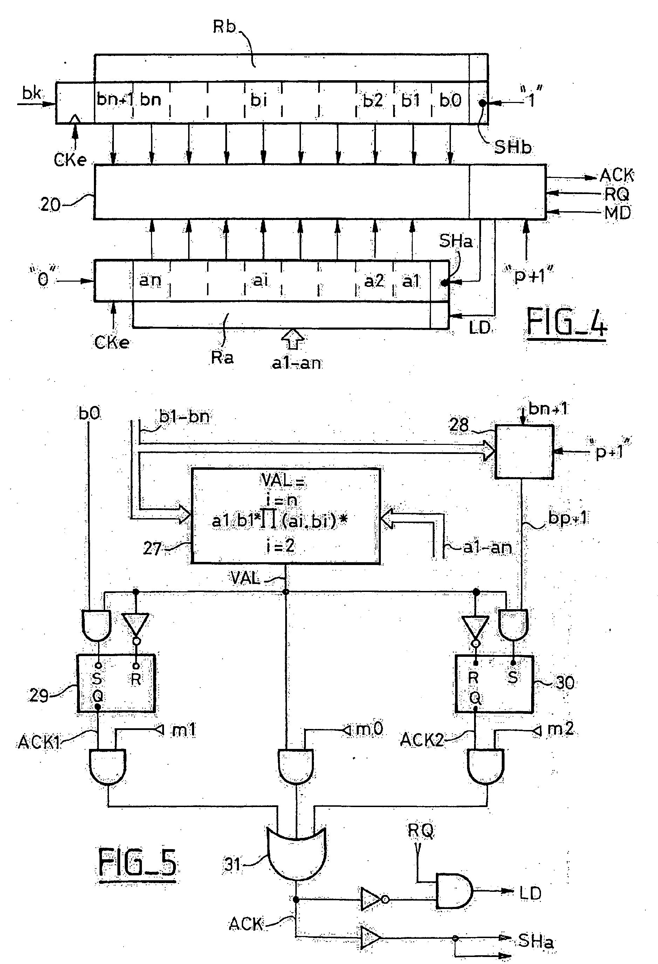

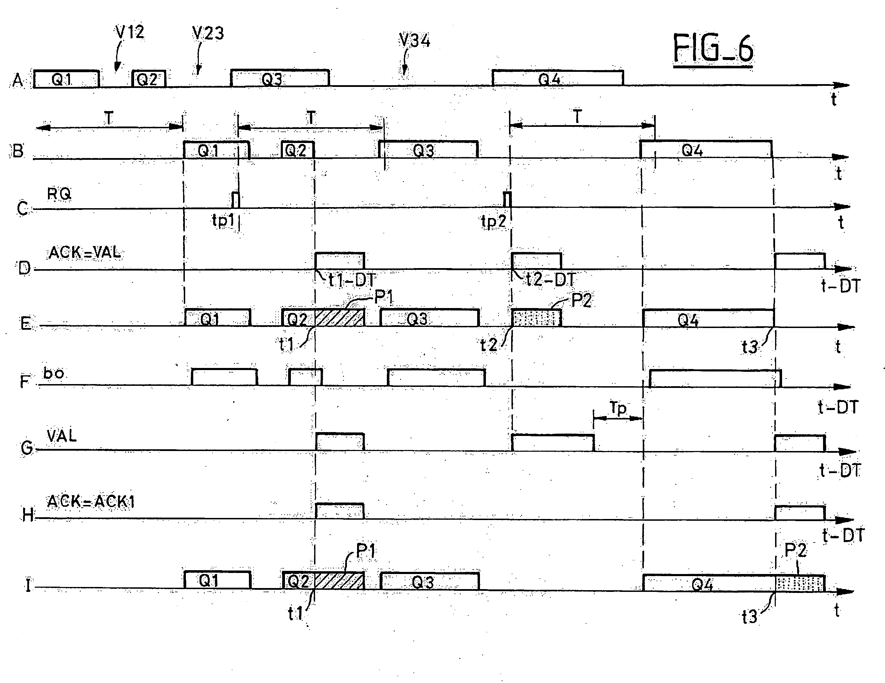

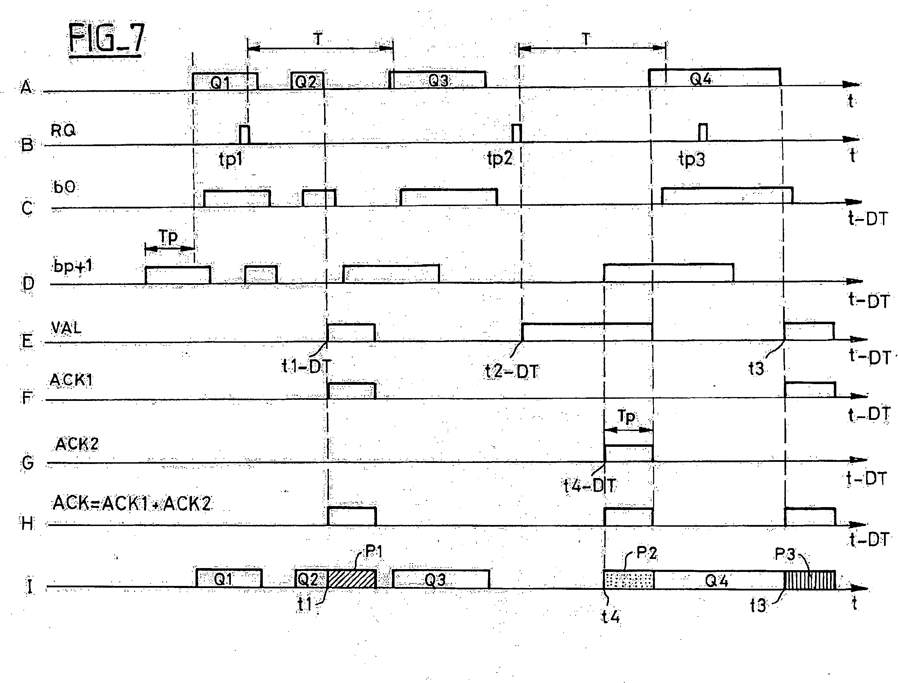

La figure 4 montre plus en détail la constitution des registres à décalage Ra, Rb et des signaux échangés avec le module de traitement 20. La figure 5 explicite sous forme de circuit logique les fonctions logiques exécutables par le module de traitement 20. Des explications sur ces figures seront données à l'occasion de la description qui va suivre du fonctionnement de l'ensemble de la station, à l'aide des figures 6 et 7.

Comme déjà indiqué, l'observation du trafic amont pour une longueur d'onde donnée utilise un des détecteurs 17, typiquement réalisé au moyen d'une simple photodiode dans le cas où les signaux optiques résultent d'une modulation d'amplitude d'ondes porteuses. Le signal de détection b qu'il fournit est donc un signal électrique dont l'amplitude suit les variations de la puissance optique, pour la longueur d'onde reçue, présente au point de détection.

Le signal de détection b est reçu par le circuit de mise en forme 22 qui réalise une intégration de ce signal et un échantillonnage au rythme de la fréquence d'échantillonnage CKe pour constituer une succession de signaux binaires bk représentatifs de l'absence ou de la présence de paquet pendant les périodes d'échantillonnage successives. Par exemple, on peut convenir que la présence d'un paquet au cours d'une période échantillonnage donnée correspondra à une valeur logique "1" et son absence à une valeur logique "0".

Bien entendu, si les signaux optiques résultent d'une modulation autre qu'une simple modulation d'amplitude (par exemple, modulation de phase optique avec motifs de délimitation des paquets), les moyens pour l'observation du trafic amont devraient être adaptés en conséquence, mais toujours avec pour résultat de constituer la succession des signaux binaires bk.

Les échantillons successifs bk ainsi obtenus sont appliqués à l'entrée série du registre à décalage Rb, commandé en permanence en décalage vers la droite (commande SHb symbolisée à "1" à droite sur la figure 4), pour y être chargés au rythme de la fréquence d'échantillonnage CKe.

Ainsi, à chaque instant les états logiques des différents étages b0,..., bi,..., bn, bn+1 du registre Rb (voir figure 4) constituent un représentation temporelle du train de paquets amont observé sur une fenêtre temporelle de largeur égale à (n+2)Te, en désignant par Te la période d'échantillonnage.

D'autre part, le registre Ra est prévu pour être chargé par son entrée parallèle avec un ensemble de bits a1,...,ai,..., an qui constituent de façon analogue une représentation temporelle d'un paquet en attente d'insertion. Avec la convention précédente, un paquet de taille comprise entre (p-1)Te et pTe sera représenté par ai = 1 pour 1 ≤ i ≤ p et ai = 0 pour p+1 ≤ i ≤ n. Une taille "réelle" Tp de paquet donnée va correspondre à une valeur de p qui sera déterminée par la taille "effective" du paquet, c'est-à-dire en tenant compte des bandes de garde à prévoir et d'une marge de tolérance. On peut remarquer ici que le nombre n d'étages du registre définit la taille de paquet maximale pouvant être gérée par le dispositif.

L'entrée série du registre Ra (symbolisée "0" à gauche sur la figure 4) est d'autre part forcée en permanence à 0. Le chargement parallèle du registre Ra ou son décalage vers la droite sont commandés respectivement par les signaux LD et SHa issus du module 20 dans des conditions qui sont précisées ci-dessous.

Lorsqu'un paquet est transféré vers la mémoire 25, l'interface 23 élabore en fonction de la taille Tp du paquet les bits a1-an correspondant et les place sur l'entrée parallèle du registre Ra. Le module 21 émet alors la requête RQ et à sa réception, le module 20 envoie au registre Ra la commande LD de chargement parallèle. Le registre Ra contient alors les bits a1-an associés au paquet présent dans la mémoire 25.

Une fois le registre Ra ainsi chargé, une comparaison des contenus des registres Ra et Rb permet alors de déterminer à tout instant si un trou du train amont ayant une taille au moins égale à celle du paquet en attente pourra servir à contenir le paquet après son insertion au niveau du point d'insertion.

Cette situation peut être signalée par un signal logique de validation VAL représentatif des instants où l'insertion sera possible (VAL = 1) ou non (VAL = 0). Avec les conventions précédentes, on aura :

VAL = (a1.b1*)Π(ai.bi)*, b1* et (ai.bi)* étant respectivement les compléments de b1 et de ai.bi, le produit logique Π s'appliquant pour i compris entre 2 et n.

Si en fonction du passage à 1 du signal VAL une émission du paquet en attente contenu dans la mémoire 25 est déclenchée par une mise à 1 du signal d'autorisation d'émission ACK, le module 20 active la commande SHa. Le registre Ra fonctionne alors en décalage vers la droite, tout en chargeant par la gauche la valeur logique 0 à chaque période d'échantillonnage. Comme le registre Rb fonctionne aussi en décalage vers la droite, le signal VAL restera à 1 tant que a1 reste à 1, c'est-à-dire pendant une durée égale à celle de l'émission effective complète du paquet concerné, puis il repassera à 0 en même temps que a1.

Il convient de noter que la prise en compte du signal d'autorisation d'émission ACK par le module de synchronisation 21 devra se faire à partir de sa réception après un retard bien défini. La valeur de ce retard prendra en compte les délais respectifs de propagation dans la ligne à retard et des divers traitements par le dispositif d'émission, de sorte que l'instant du début d'émission effective du paquet dans la fibre déterminé par l'instant de mise à 1 du signal ACK coïncide le mieux possible avec l'arrivée au niveau du point d'insertion de la partie du train amont qui était représentée par les bits b1-bn contenus dans le registre Rb à l'instant où le signal ACK est passé à 1.

Si on veut émettre le paquet en attente au plus tôt, le passage à 1 du signal VAL devra être directement utilisé comme signal de contrôle d'émission ACK pour déclencher l'émission d'un paquet en attente. On aurait alors le fonctionnement illustré par les chronogrammes A à E de la figure 6.

Le chronogramme A représente un exemple de train de paquets amont observé au point de détection. Les paquets successifs Q1, Q2, Q3, Q4 sont espacés par les trous successifs V12, V23, V34. On retrouve sur chronogramme B le même train observable au niveau du point d'insertion à l'entrée du coupleur 6, c'est-à-dire retardé d'une durée T fonction de la ligne à retard 19. Le chronogramme C représente un exemple de signal de requête d'autorisation d'émission RQ.

Pour simplifier la présentation des chronogrammes, plutôt que de montrer aux mêmes instants les signaux ACK et VAL issus du module 20, le chronogramme D représente des signaux ACK et VAL retardés qui correspondent aux effets que les signaux ACK et VAL produisent au niveau du point d'insertion après un retard DT approprié.

Si par exemple un requête d'autorisation d'émission RQ est émise à l'instant tp1 (voir le chronogramme C) pour un premier paquet P1 (voir le chronogramme E), le signal de validation VAL sera mis à l'état 1 à un instant t1-DT, puisque la taille du paquet P1 aura été détectée à cet instant inférieure à celle du trou V23.

En utilisant le signal VAL comme signal de contrôle d'émission ACK (voir le chronogramme D), l'insertion du paquet P1 débutera à l'instant t1 et, si le retard DT est bien choisi, il sera accolé au paquet Q2, à la suite de celui-ci (voir le chronogramme E).

Si par contre un requête d'autorisation d'émission RQ est émise à l'instant tp2 (voir le chronogramme C) pour un deuxième paquet P2 (voir le chronogramme E), le signal de validation VAL sera mis à l'état 1 à l'instant t2-DT, puisque la taille du paquet P2 aura été détectée inférieure à celle du trou V34. En utilisant toujours le signal VAL comme signal de contrôle d'émission ACK (voir le chronogramme D), l'insertion du paquet P2 débutera à l'instant t2, mais dans cet exemple il ne sera accolé à aucun paquet du train amont comme le montre le chronogramme E du train aval qui en résulte.

Pour éviter cette situation, il convient selon l'invention de créer un autre signal de contrôle d'émission ACK qui assure qu'un paquet inséré soit dans tous les cas accolé à un paquet du train amont.

Selon un première approche, on peut se contenter d'assurer un accolement de tout paquet inséré à la suite d'un paquet du train amont, toujours à la condition bien entendu qu'il précède un trou de taille suffisante pour le paquet à insérer.

Ceci peut être réalisé en prévoyant d'abord que le registre Rb comporte un étage supplémentaire b0 placé à la droite du registre. L'état à 1 de cet étage alors que des étages qui suivent b1, b2, ... sont à 0 constitue une indication que dans la fenêtre temporelle observée l'étage b0 correspond à la fin d'un paquet en transit, c'est-à-dire que l'étage b1 correspond à un début de trou. Ensuite, pour assurer que le paquet puisse être inséré dans un trou, tout en étant accolé à la suite du paquet du train amont qui précède ce trou, on prendra comme signal de contrôle d'émission ACK le signal ACK1 qui prend la valeur 1 dès que le produit logique VAL.b0 passe à 1, ACK1 restant ensuite à 1 tant que VAL reste à 1.

Dans l'exemple précédent, les chronogrammes F, G et H représentent respectivement les signaux b0 (état logique de l'étage b0), VAL et ACK1 retardés de la valeur DT définie précédemment. Le chronogramme I montre le train aval qui en résulte. On peut remarquer que le paquet P2 n'est plus inséré entre les paquets Q3 et Q4, mais est accolé à partir de l'instant t3 à la suite du paquet suivant Q4.

Selon une deuxième approche, on peut créer un autre signal de contrôle d'émission ACK qui assure qu'un paquet inséré soit dans tous les cas accolé à un paquet du train amont, mais avec un accolement avant un paquet qui délimite un trou qui précède ce paquet, ce trou étant toujours de taille suffisante pour le paquet à insérer.

Pour cela, on fait intervenir un information supplémentaire représentative de la taille Tp du paquet à insérer et symbolisée par "p+1" à la figure 3. Si la taille du paquet est comprise entre (p-1)Te et pTe, l'étage ap+1 du registre Ra supposé chargé sera le premier en partant de la droite à prendre la valeur 0. D'autre part, l'état à 1 de l'étage homologue bp+1 du registre Rb alors que des étages de rangs inférieurs bp, bp-1, ... sont à 0 constitue une indication que dans la fenêtre observée bp+1 correspond au début d'un paquet en transit, c'est-à-dire que l'étage bp correspond à une fin de trou. Pour assurer que le paquet puisse être inséré dans un trou, tout en étant accolé avant le paquet du train amont qui succède à ce trou, on pourra prendre comme signal de contrôle d'émission ACK le signal ACK2 qui prend la valeur 1 dès que le produit logique VAL.bp+1 passe à 1, ACK2 restant ensuite à 1 tant que VAL reste à 1.

Selon une troisième approche, on peut créer un troisième signal de contrôle d'émission ACK qui assure qu'un paquet inséré soit dans tous les cas accolé à un paquet du train amont, mais avec un accolement de préférence à la suite d'un paquet qui délimite un trou succédant à ce paquet, ou à défaut avant un paquet qui délimite un trou précédant ce paquet. Pour cela, on pourra prendre comme signal de contrôle d'émission ACK le signal ACK1+ACK2 ,où ACK1 et ACK2 correspondent aux signaux logiques définis ci-dessus.

Ce cas est illustré par les chronogrammes A à I de la figure 7. Les signaux des chronogrammes A, B, C et F correspondent respectivement à ceux des chronogrammes B, C, F et H de la figure 6 de l'exemple précédent et déjà commentés.

En outre, le chronogramme D représente le signal bp+1 qui correspond aux variations en fonction du temps de l'état logique de l'étage bp+1, retardé de la valeur DT définie précédemment. Les chronogrammes E, G et H représentent respectivement les signaux VAL, ACK2 et ACK1+ACK2 également retardés de la valeur DT.

Le chronogrammes I montre le train aval qui résulte de l'utilisation de ACK1+ACK2 comme signal de contrôle d'émission ACK. On peut remarquer que le paquet P1 est accolé à la suite du paquet Q2 à partir de l'instant t1, le paquet P2 est accolé avant le paquet Q4 à partir de l'instant t4 et qu'un troisième paquet P3 a pu être accolé à la suite du paquet Q4 à partir de l'instant t3.

Comme indiqué précédemment, il convient que l'autorisation d'émission ACK provoque l'émission du paquet après un certain retard ajusté de façon à ce que le paquet émis soit accolé à l'un des paquets en transit, accolé signifiant ici séparé temporellement du paquet en transit d'un intervalle de temps inférieur à une valeur maximale déterminée, aussi petite que possible. En pratique, cette valeur maximale déterminée devra être toutefois supérieure à une autre valeur minimale déterminée définissant un temps de garde minimal devant séparer deux paquets consécutifs quelconques des trains de paquets véhiculés. Par exemple, pour un réseau ETHERNET, ce temps de garde doit correspondre à 96 bits, c'est-à-dire sera fixé à 96 ns pour un débit de 1 Gbit/s et à 9,6 ns pour un débit de 10 Gbit/s.

Les différentes fonctions pouvant être mises en oeuvre dans le module de contrôle 20 sont résumées schématiquement à la figure 5 sous la forme d'un circuit logique impliquant les différents signaux commentés précédemment.

Le circuit représenté est en outre prévu pour pouvoir sélectionner comme signal de contrôle d'émission ACK soit VAL, soit ACK1, soit ACK2, soit ACK1+ACK2. La sélection est réalisée au moyen de trois signaux binaires de sélection m0, m1, m2 qui correspondent au signal MD de mode d'insertion mentionné plus haut en référence à la figure 3.

Le circuit logique comporte un bloc combinatoire 27 pour calculer en fonction des états a1-an et b1-bn la valeur logique du signal de validation VAL selon l'équation donnée précédemment.

Un circuit de sélection 28 adressé en fonction de l'information de taille de paquet "p+1" est prévu pour lire dans le registre Rb le bit bp+1.

Une bascule 29 reçoit sur son entrée S de mise à 1 le produit VAL.b0 et sur son entrée R de remise à 0 le complément de VAL, et fournit le signal ACK1.

Une autre bascule 30 reçoit sur son entrée S de mise à 1 le produit VAL.bp+1 et sur son entrée R de remise à 0 le complément de VAL, et fournit le signal ACK2.

En fonction des signaux de sélection m0, m1, m2, les signaux VAL, ACK1 et ACK2 sont sélectivement appliquée à l'entrée d'une porte OU 31 qui fournit en sortie le signal ACK qui servira de signal de contrôle d'émission ainsi que de commande SHa de mise en décalage du registre Ra.

Le complément de ACK sert à valider le chargement parallèle LD du registre Ra en réponse au signal de requête d'autorisation d'émission RQ.

Le fait de pouvoir sélectionner par m0, m1, m2 comme signal de contrôle d'émission ACK l'un quelconque des signaux VAL, ACK1, ACK2 ou ACK1+ACK2 permet une flexibilité d'utilisation de la station.

En particulier, il est facile de mettre en oeuvre un mécanisme de type "chien de garde" qui vise à éviter que les émissions par la station soient bloquées trop longtemps. En effet, en appliquant un des signaux de contrôle d'émission ACK1, ACK2 ou ACK1+ACK2 qui imposent à tout paquet inséré d'être accolé, on peut suspendre l'émission d'un paquet en attente pendant une très longue durée si ce paquet est pris en compte alors qu'on est en présence d'un trou très long à cause de faibles activités d'émission en amont.

Pour prendre en compte cette situation, l'invention prévoit un dispositif de minutage (non représenté, mais de réalisation évidente) pour mesurer le temps écoulé depuis l'instant où sont détectées des données en attente d'émission correspondant à un paquet à émettre. Au delà d'une durée de seuil déterminée, le dispositif de minutage est prévu pour déclencher l'émission du paquet à émettre en réponse au seul signal de validation VAL, indépendamment du signal de contrôle d'émission initialement choisi. Il en résultera l'insertion d'un paquet non accolé, ce qui est peu pénalisant pour d'éventuelles stations en aval puisque ce mécanisme n'intervient que pendant des périodes de faible trafic.

Le remplacement de ACK1, ACK2 ou ACK1+ACK2 par VAL et réciproquement sera simplement réalisé au moyen des signaux de sélection m0, m1, m2.

L'invention n'est pas limitée aux seuls modes de réalisation décrits ci-dessus. En particulier, elle concerne aussi les réseaux WDM. Il suffit pour cela d'appliquer les moyens décrits précédemment à chacune des longueurs d'onde prévues. De même, l'invention peut s'appliquer à tout type de modulation utilisée pour former les signaux optiques.

Bien entendu, l'invention peut s'appliquer aussi bien à des réseaux passifs qu'à des réseaux ayant des liaisons munies d'amplificateurs.

## Revendications

1. Station (4i) pour réseau de transmission optique, ce réseau (N) comprenant au moins ladite station et une liaison optique (2) prévue pour véhiculer des trains de paquets constitués de paquets optiques successifs (Q1 à Q4) portés chacun par une longueur d'onde commune et se propageant selon un sens donné, un intervalle de temps séparant deux paquets consécutifs d'un train de paquets étant appelé "trou" (V12, V23, V34), ladite station comportant un dispositif d'émission (12-15) couplé à ladite liaison en un point d'insertion (6) et apte à injecter dans la liaison des paquets optiques portés par ladite longueur d'onde commune, la station étant prévue pour observer en un point de détection (18) de la liaison situé en amont dudit point d'insertion (6) les trains de paquets dit "amont" véhiculés jusqu'à ce point de détection (18), et pour qu'en fonction de cette observation chaque paquet correspondant à des données en attente d'émission et émis par ledit dispositif d'émission entraîne la formation au point d'insertion (6) d'un train de paquets dit "aval", ce train aval contenant ledit paquet émis (P1) intercalé entre des premier (Q2, Q3) et second (Q3, Q4) paquets délimitant un trou (V23) dudit train amont, **caractérisé en ce que** ladite station comporte un dispositif de détection (17, 11) desdits trains de paquets "amont" apte à former un signal de contrôle d'émission (ACK1, ACK2, ACK1+ACK2) tel qu'en cas d'émission par le dispositif d'émission en fonction dudit signal de contrôle, tout paquet (P1, P2, P3) émis et intercalé entre lesdits premier (Q2, Q3) et second (Q3, Q4) paquets délimitant un trou soit accolé à l'un au moins desdits premier et second paquets (Q2, Q4), c'est-à-dire soit séparé temporellement soit dudit premier paquet (Q2), soit dudit second paquet (Q4) d'un intervalle de temps inférieur à une valeur maximale déterminée.

2. Station selon la revendication 1, **caractérisé en ce que** ledit premier paquet (Q2, Q3, Q4) précédant ledit second paquet (Q3, Q4), ledit signal de contrôle (ACK1) est tel que tout paquet (P1, P2) émis en fonction de ce signal de contrôle soit accolé exclusivement audit premier paquet (Q2, Q4).

3. Station selon la revendication 1, **caractérisé en ce que** ledit premier paquet (Q2, Q3) précédant ledit second paquet (Q3, Q4), ledit signal de contrôle (ACK2) est tel que tout paquet (P2) émis en en fonction de ce signal de contrôle soit accolé exclusivement audit second paquet (Q4).

4. Station selon la revendication 1, **caractérisé en ce que** ledit premier paquet (Q2, Q3, Q4) précédant ledit second paquet (Q3, Q4), ledit signal de contrôle (ACK1+ACK2) est tel que tout paquet (P1, P2, P3) émis en fonction de ce signal de contrôle soit en priorité accolé audit premier paquet (Q2, Q4).

5. Station selon l'une des revendications 1 à 4, **caractérisé en ce qu**'elle comporte un dispositif de minutage pour mesurer le temps écoulé depuis l'instant où sont détectées des données en attente d'émission correspondant à paquet à émettre, en ce que ledit dispositif de détection (17, 11) est apte à former un signal de validation (VAL) tel qu'en cas d'émission par le dispositif d'émission en réponse à ce signal de validation, tout paquet (P1, P2, P3) émis soit intercalé entre lesdits premier (Q2, Q3) et second (Q3, Q4) paquets délimitant un trou, et en ce que ledit dispositif de minutage est prévu pour déclencher l'émission dudit paquet à émettre en réponse audit signal de validation (VAL), indépendamment dudit signal de contrôle d'émission (ACK1, ACK2, ACK1+ACK2).

6. Réseau de transmission optique, ce réseau (N) comprenant des stations (4-1 à 4-4) et une liaison optique (2) prévue pour véhiculer des trains de paquets constitués de paquets optiques successifs (Q1 à Q4) portés chacun par une longueur d'onde commune et se propageant selon un sens donné, un intervalle de temps séparant deux paquets consécutifs d'un train de paquets étant appelé "trou" (V12, V23, V34), **caractérisé en ce qu'**au moins une desdites stations est conforme à l'une des revendications 1 à 5.

## Claims

1. Station (4i) for optical transmission network, this network (N) comprising at least said station and an optical link (2) provided for transporting packet streams consisting of successive optical packets (Q1 to Q4) each carried by a common wavelength and being propagated in a given direction, a time interval separating two consecutive packets of a packet stream being called a "void" (V12, V23, V34), said station comprising a transmission device (12-15) coupled to said link at an insertion point (6) and suitable for injecting optical packets carried by said common wavelength into the link, the station being arranged to observe at a detection point (18) of the link situated upstream of said insertion point (6) the so-called "upstream" packet streams transported to this detection point (18) and in order that, as a function of this observation, each packet corresponding to data awaiting transmission and transmitted by said transmission device causes the formation at the insertion point (6) of a "downstream" packet stream, this downstream stream containing said transmitted packet (P1) interposed between first (Q2, Q3) and second (Q3, Q4) packets delimiting a void (V23) of said upstream stream, **characterised in that** said station comprises a device (17, 11) for detection of said "upstream" packet streams suitable for forming a transmission control signal (ACK1, ACK2, ACK1+ACK2) such that in the case of transmission by the transmission device as a function of said control signal, any packet (P1, P2, P3) transmitted and interposed between said first (Q2, Q3) and second (Q3, Q4) packets delimiting a void is attached to at least one of said first and second packets (Q2, Q4), that is to say is temporally separated either from said first packet (Q2), or from said second packet (Q4) by a time interval less than a maximal determined value.

2. Station according to claim 1, **characterised in that** said first packet (Q2, Q3, Q4) preceding said second packet (Q3, Q4), said control signal (ACK1) is such that any packet (P1, P2) transmitted as a function of this control signal is attached exclusively to said first packet (Q2, Q4).

3. Station according to claim 1, **characterised in that** said first packet (Q2, Q3) preceding said second packet (Q3, Q4), said control signal (ACK2) is such that any packet (P2) transmitted as a function of this control signal is attached exclusively to said second packet (Q4).

4. Station according to claim 1, **characterised in that** said first packet (Q2, Q3, Q4) preceding said second packet (Q3, Q4), said control signal (ACK1+ACK2) is such that any packet (P1, P2, P3) transmitted as a function of this control signal is attached as a priority to said first packet (Q2, Q4).

5. Station according to one of claims 1 to 4, **characterised in that** it comprises a timing device in order to measure the elapsed time from the moment when the data awaiting transmission corresponding to packet to be transmitted are detected, **in that** said detection device (17, 11) is suitable for forming a validation signal (VAL) such that in the event of transmission by the transmission device in response to this validation signal, any transmitted packet (P1, P2, P3) is interposed between said first (Q2, Q3) and second (Q3, Q4) packets delimiting a void, **in that** said timing device is provided in order to trigger the transmission of said packet to be sent in response to said validation signal (VAL), independently of said transmission control signal (ACK1, ACK2, ACK1 +ACK2).

6. Optical transmission network, this network (N) comprising stations (4-1 to 4-4) and an optical link (2) provided in order to transport packet streams consisting of successive optical packets (Q1 to Q4) each carried by a common wavelength and being propagated in a given direction, a time interval separating two consecutive packets of a packet stream being called a "void" (V12, V23, V34), **characterised in that** at least one of said stations complies with one of claims 1 to 5

## Patentansprüche

1. Station (4-i) für ein optisches Übertragungsnetzwerk, wobei dieses Netz (N) zumindest diese Station und eine optische Verbindung (2) enthält, die dafür vorgesehen ist, aus aufeinander folgenden optischen Paketen (Q1 bis Q4) bestehende Paketströme zu transportieren, die jeweils von einer gemeinsamen Wellenlänge getragen werden und sich entsprechend einer bestimmten Richtung ausbreiten, wobei ein Zeitintervall, das zwei aufeinander folgende Pakete eines Paketstroms trennt, als "Lücke" (V 12, V23, V34) bezeichnet wird, wobei diese Station eine Sendevorrichtung (12-15) enthält, die an diese Verbindung an einer Einfügestelle (6) gekoppelt ist und im Stande ist, in die Verbindung optische Pakete einzukoppeln, die von dieser gemeinsamen Wellenlänge getragen werden, und die Station dafür vorgesehen ist, an einer oberhalb dieser Einfügestelle (6) gelegenen Erfassungsstelle (18) der Verbindung die bis zu dieser Erfassungsstelle (18) transportierten so genannten "Oberhalb"-Paketströme zu beobachten, und damit in Abhängigkeit von dieser Beobachtung jedes Paket, das sendebereiten Daten entspricht und von dieser Sendevorrichtung gesendet wird, an der Einfügestelle (6) die Bildung eines so genannten "Unterhalb"-Paketstroms bewirkt, wobei dieser Unterhalb-Strom dieses gesendete Paket (P1) eingeschoben zwischen einem ersten (Q2, Q3) und einem zweiten (Q3, Q4) Paket, welche eine Lücke (V23) dieses Oberhalb-Stroms begrenzen, enthält, **dadurch gekennzeichnet, dass** diese Station eine Vorrichtung zur Erfassung (17, 11) dieser "Oberhalb"-Paketströme enthält, die im Stande ist, ein Sendekontrollsignal (ACK1, ACK2, ACK1+ACK2) zu bilden, so dass im Falle des von diesem Kontrollsignal abhängigen Sendens durch die Sendevorrichtung jedwedes Paket (P1, P2, P3), das gesendet und zwischen dieses erste (Q2, Q3) und dieses zweite (Q3, Q4) Paket eingeschoben wird, welche eine Lücke begrenzen, an mindestens eines dieses ersten und dieses zweiten Pakets (Q2, Q4) angehängt wird, das heißt zeitlich entweder von diesem ersten Paket (Q2) oder von diesem zweiten Paket (Q4) durch ein Zeitintervall getrennt wird, das kleiner ist als ein bestimmter Höchstwert.

2. Station gemäß Anspruch 1 **dadurch gekennzeichnet, dass** dieses erste Paket (Q2, Q3, Q4) diesem zweiten Paket (Q3, Q4) vorangeht, dass dieses Kontrollsignal (ACK1) dergestalt ist, dass jegliches Paket (P1, P2), das in Abhängigkeit von diesem Kontrollsignal gesendet wird, ausschließlich an dieses erste Paket (Q2, Q4) angehängt wird.

3. Station gemäß Anspruch 1 **dadurch gekennzeichnet, dass** dieses erste Paket (Q2, Q3) diesem zweiten Paket (Q3, Q4) vorangeht, dass dieses Kontrollsignal (ACK2) dergestalt ist, dass jegliches Paket (P2), das in Abhängigkeit von diesem Kontrollsignal gesendet wird, ausschließlich an dieses zweite Paket (Q4) angehängt wird.

4. Station gemäß Anspruch 1 **dadurch gekennzeichnet, dass** dieses erste Paket (Q2, Q3, Q4) diesem zweiten Paket (Q3, Q4) vorangeht, dass dieses Kontrollsignal (ACK1+ACK2) dergestalt ist, dass jegliches Paket (P1, P2, P3), das in Abhängigkeit von diesem Kontrollsignal gesendet wird, vorrangig an dieses erste Paket (Q2, Q4) angehängt wird.

5. Station gemäß einem der Ansprüche 1 bis 4, **dadurch gekennzeichnet, dass** sie eine Timing-Vorrichtung enthält zum Messen der Zeit, die seit dem Zeitpunkt verstrichen ist, wo übertragungsbereite Daten erfasst werden, die einem zu sendenden Paket entsprechen, dass diese Erfassungsvorrichtung (17, 11) im Stande ist, ein Freigabesignal (VAL) zu bilden, so dass im Falle des Sendens durch die Sendevorrichtung als Antwort auf dieses Freigabesignal, jedwedes gesendete Paket (P1, P2, P3) zwischen dieses erste (Q2, Q3) und dieses zweite (Q3, Q4) Paket, welche eine Lücke begrenzen, eingefügt wird, und dass diese Timing-Vorrichtung dafür vorgesehen ist, das Senden dieses zu sendenden Pakets als Antwort auf dieses Freigabesignal (VAL) auszulösen, unabhängig von diesem Sendekontrollsignal (ACK1, ACK2, ACK1+ACK2).

6. Optisches Übertragungsnetzwerk, wobei dieses Netzwerk (N) Stationen (4-1 bis 4-4) einschließt und eine optische Verbindung (2), die dafür vorgesehen ist, aus aufeinander folgenden optischen Paketen (Q1 bis Q4) bestehende Paketströme zu transportieren, die jeweils von einer gemeinsamen Wellenlänge getragen werden und sich entsprechend einer bestimmten Richtung ausbreiten, wobei ein Zeitintervall, das zwei aufeinander folgende Pakete eines Paketstroms trennt als "Lücke" (V12, V23, V34) bezeichnet wird, **dadurch gekennzeichnet, dass** mindestens eine dieser Stationen einem der Ansprüche 1 bis 5 entspricht.
